# EUROPEAN PATENT SPECIFICATION

(11) **EP 1 920 590 B1**
(45) Date of publication and mention of the grant of the patent: **20.10.2010**
(21) Application number: 06778321.7
(22) Date of filing: 22.08.2006
(51) Int. Cl.: H04N 1/00, H04L 12/28

(54) **MOBILE WIRELESS COMMUNICATION TERMINAL AND METHOD FOR PROVIDING A SLIDESHOW**
MOBILE DRAHTLOSE KOMMUNIKATIONSENDGERÄT UND VERFAHREN ZUM BEREITSTELLEN EINER DIAVORFÜHRUNG
TERMINAL DE COMMUNICATIONS MOBILE SANS FIL ET PROCEDE DE PRESENTATION D'UN DIAPORAMA

(30) Priority: 31.08.2005 US 216935
(43) Date of publication of application: 14.05.2008
(73) Proprietor: Sony Ericsson Mobile Communications AB, 221 88 Lund (SE)
(72) Inventor: WASSINGBO, Tomas, S-22352 Lund (SE)
(74) Representative: VALEA AB
(86) International application number: PCT/EP2006/065556
(87) International publication number: WO 2007/025910

(56) References cited:
- EP-A- 1 478 134
- WO-A-2005/112422
- US-A1- 2004 136 338
- US-A1- 2004 259 581
- US-A1- 2005 107 073
- "Emerging Technologies : Wireless Networks" LANGUAGE LEARNING & TECHNOLOGY, [Online] vol. 6, no. 1, January 2002 (2002-01), pages 6-10, XP002400638 ISSN: 1094-3501 Retrieved from the Internet: URL:http://llt.msu.edu/vol6num1/pdf/emergi ng.pdf> [retrieved on 2006-09-19]

## Description

### FIELD OF THE INVENTION

The present invention relates to electronic devices and, more particularly, to electronic devices and methods for displaying image slideshows.

### BACKGROUND OF THE INVENTION

Mobile electronic devices, such as wireless communication terminals (*e.g.,* cellular telephones), are widely used to store and display digital image files (*e.g.,* data files representing still images such as digital photographs or pictures). A user may wish to share picture files stored on his own mobile electronic device with one or more other people nearby. One way to do this is to display the images on the user's own mobile electronic device for the others to view. However, this approach may not be feasible or convenient. If the other people have mobile electronic devices of their own, the user may send his picture files to the other mobile electronic devices one-by-one using multimedia messaging service (MMS) or a point-to-point interface (*e.g.,* a Bluetooth or infrared (IR) interface), for example. The user may also display the pictures on another device such as a media center (*e.g.,* a PC or laptop, a television, an audio receiver, etc.), if available. The media center may be equipped with a suitable communication module, which may be an integrated module or an auxiliary (*e.g.,* plug- in) module to allow communication across a point-to-point interface (*e.g.,* a Bluetooth or infrared (IR) interface). EP-A-1 478 134 discloses establishing a group of mobile wireless terminals, inter alia for displaying a slideshow on group participant terminals.

### SUMMARY OF THE INVENTION

According to the present invention, a mobile wireless communication terminal includes a wireless communication module and a controller. The wireless communication module is configured to communicate with other communication terminals over a wireless interface. The controller is configured to establish a slideshow session with at least one participant wireless communication terminal via the wireless communication module, and to send a series of digital image files to the at least one participant wireless communication terminal via the wireless communication module during the slideshow session including a first digital image file to be automatically displayed on a display of the at least one participant wireless communication terminal, and other digital image files to be stored in each of the plurality of wireless communication terminals, and also to send a pointer identifying one of said stored other digital image files to each of the plurality of participant wireless communication terminals, when it is time to view said one of said stored other digital image files.

The controller can be configured to send the series of digital image files to the at least one participant wireless communication terminal in a temporally spaced apart sequence.

The controller may be configured to send an invitation signal to the at least one participant wireless communication terminal to participate in the slideshow session, and to receive an acceptance signal from the at least one participant wireless communication terminal to participate in the slideshow session.

The wireless communication module may be configured to communicate with the other communication terminals over a direct point-to-point wireless interface and the controller is configured to establish the slideshow session with the at least one participant wireless communication terminal and to send the series of digital image files to the at least one participant wireless communication terminal during the slideshow session via the direct point-to-point wireless interface.

According to some embodiments, the wireless communication module includes a short range transmitter and the controller is configured to send the digital image file to the at least one participant wireless communication terminal via the short range transmitter. The short range transmitter can be a Bluetooth transmitter. The short range transmitter can be a WLAN transmitter.

The wireless communication terminal may include a cellular telephone.

According to the present invention, a method for providing a slideshow using a host mobile wireless communication terminal includes: establishing a wireless connection between the host wireless communication terminal and at least one participant wireless communication terminal; establishing a slideshow session with the at least one participant wireless communication terminal via the wireless communication module; and sending a series of digital image files to the at least one participant wireless communication terminal via the wireless communication module during the slideshow session including a first digital image file to be automatically displayed on a display of the at least one participant wireless communication terminal, and other digital image files to be stored in each of the plurality of wireless communication terminals, and also to send a printer to identifying one of said stored other digital image files to each of the plurality of participant wireless communication terminals, when it is time to view said one of said stored other digital image files.

Further features, advantages and details of the present invention will be appreciated by those of ordinary skill in the art from a reading of the figures and the detailed description of the preferred embodiments that follow, such description being merely illustrative of the present invention.

### BRIEF DESCRIPTION OF THE DRAWINGS

**Figure 1** is a schematic diagram of a mobile wireless communication terminal according to some embodiments of the present invention and an exemplary base station transceiver.

**Figure 2** is a flowchart illustrating methods in accordance with some embodiments of the present invention.

**Figure 3** is a flowchart illustrating methods in accordance with further embodiments of the present invention.

**Figure 4** is a schematic diagram of a slideshow display system according to some embodiments of the present invention including the mobile wireless communication terminal of **Figure 1****.**

**Figure 5** is a schematic diagram illustrating a display of the mobile wireless communication terminal of **Figure 1** in accordance with some embodiments of the present invention.

### DETAILED DESCRIPTION OF EMBODIMENT OF THE INVENTION

The present invention now will be described more fully with reference to the accompanying drawings, in which embodiments of the invention are shown. However, this invention should not be construed as limited to the embodiments set forth herein. Rather, these embodiments are provided so that this disclosure will be thorough and complete, and will fully convey the scope of the invention to those skilled in the art. Like numbers refer to like elements throughout.

As used herein, the term "comprising" or "comprises" is open-ended, and includes one or more stated features, integers, elements, steps, components or functions but does not preclude the presence or addition of one or more other features, integers, elements, steps, component, functions or groups thereof.

As used herein, the term "and/or" includes any and all combinations of one or more of the associated listed items.

As used herein, the common abbreviation "*e.g.*", which derives from the Latin phrase "exempli gratia," may be used to introduce or specify a general example or examples of a previously mentioned item, and is not intended to be limiting of such item. If used herein, the common abbreviation *"i.e.",* which derives from the Latin phrase "id est," may be used to specify a particular item from a more general recitation.

The terminology used herein is for the purpose of describing particular embodiments only and is not intended to be limiting of the invention.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

It will be understood that when an element is referred to as being "coupled" or "connected" to another element, it can be directly coupled or connected to the other element or intervening elements may also be present. In contrast, when an element is referred to as being "directly coupled" or "directly connected" to another element, there are no intervening elements present. Furthermore, "coupled" or "connected" as used herein may include wirelessly coupled or connected.

Well-known functions or constructions may not be described in detail for brevity and/or clarity.

The present invention may be embodied as methods, electronic devices, and/or computer program products. Accordingly, the present invention may be embodied in hardware and/or in software (including firmware, resident software, micro-code, *etc*.), which may be generally referred to herein as a "circuit" or "module". Furthermore, the present, invention may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that can contain, store, communicate, propagate, or transport the program for use by or in connection with the instruction execution system, apparatus, or device.

Embodiments according to the present invention are described with reference to block diagrams and/or operational illustrations of methods and communication terminals. In this regard, each block may represent a module, segment, or portion of code, which comprises one or more executable instructions for implementing the specified logical function(s). It is to be understood that each block of the block diagrams and/or operational illustrations, and combinations of blocks in the block diagrams and/or operational illustrations, can be implemented by radio frequency, analog and/or digital hardware, and/or program instructions. These program instructions may be provided to a controller, which may include one or more general purpose processors, special purpose processors, ASICs, and/or other programmable data processing apparatus, such that the instructions, which execute via the controller and/or other programmable data processing apparatus, create means for implementing the functions/acts specified in the block diagrams and/or operational block or blocks. In some alternate implementations, the functions/acts noted in the blocks may occur out of the order noted in the operational illustrations. For example, two blocks shown in succession may in fact be executed substantially concurrently or the blocks may sometimes be executed in the reverse order, depending upon the finctionality/acts involved.

These computer program instructions may also be stored in a computer-usable or computer-readable memory that may direct a computer or other programmable data processing apparatus to function in a particular manner, such that the instructions stored in the computer usable or computer-readable memory produce an article of manufacture including instructions that implement the function specified in the flowchart and/or block diagram block or blocks.

The computer-usable or computer-readable medium may be, for example but not limited to, an electronic, magnetic, optical, electromagnetic, infrared, or semiconductor system, apparatus, device, or propagation medium. More specific examples (a nonexhaustive list) of the computer-readable medium include the following: hard disks, optical storage devices, a transmission media such as those supporting the Internet or an intranet, magnetic storage devices, an electrical connection having one or more wires, a portable computer diskette, a random access memory (RAM), a read-only memory (ROM), an erasable programmable read-only memory (EPROM or Flash memory), an optical fiber, and a compact disc read-only memory (CD-ROM).

Computer program code for carrying out operations of the present invention may be written in an object oriented programming language such as Java®, Smalltalk or C++. However, the computer program code for carrying out operations of the present invention may also be written in conventional procedural programming languages, such as the "C" programming language and/or a lower level assembler language. It will be further appreciated that the functionality of any or all of the program modules may also be implemented using discrete hardware components, one or more application specific integrated circuits (ASICs), or a programmed digital signal processor or microcontroller.

As used herein, "electronic component" means an active device as contrasted with a passive electrical connector or the like. An electronic component may include a processor.

As used herein, "streamed" or "streaming" means that a file, such as an image file, is continuously sent via a digital signal to a receiving device where the image file is concurrently displayed via a suitable receiving application. The digital signal is typically buffered.

As used herein, a "communication terminal" includes, but is not limited to, a terminal that is configured to receive/transmit communication signals via a wireline connection, such as via a public-switched telephone network (PSTN), digital subscriber line (DSL), digital cable, or another data connection/network, and/or via a wireless interface with, for example, a cellular network, a satellite network, a wireless local area network (WLAN), and/or another communication terminal.

When the communication terminal is configured to communicate over a wireless interface, it is referred to herein as a "wireless communication terminal" or a "wireless terminal." Examples of wireless terminals include, but are not limited to, a cellular telephone, personal data assistant (PDA), pager, and/or a computer that is configured to communicate data over a wireless communication interface that can include a cellular telephone interface, a Bluetooth interface, a wireless local area network interface (*e.g.,* 802.1 1), another RF communication interface, and/or an optical/infra-red communication interface.

As used herein, "mobile terminals" may be portable, transportable, installed in a vehicle (aeronautical, maritime, or land-based), or situated and/or configured to operate locally and/or in a distributed fashion at any other location(s) on earth and/or in space.

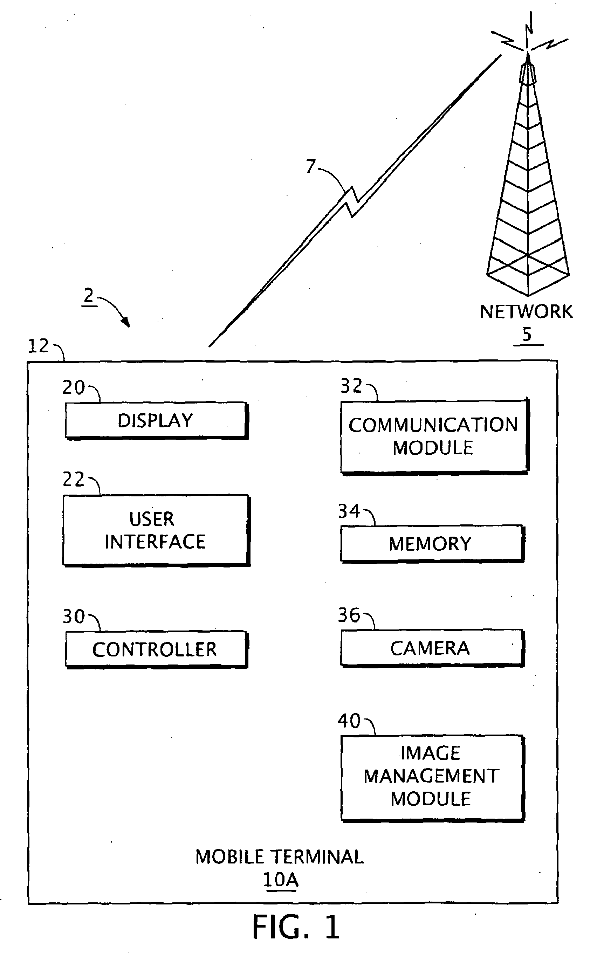

Some embodiments of the present invention will now be described below with respect to **Figures 1-5****.** Some embodiments of the present invention provide mobile wireless communication terminals capable of providing a slideshow including one or more digital image files on one or more participant wireless communication terminals.

Referring now to **Figure 1****,** an exemplary mobile wireless communication terminal **10A** in accordance with some embodiments of the present invention is illustrated. The wireless terminal **10A** is configured to communicate data with one or more other wireless terminals over a direct wireless communication interface therebetween, over anther wireless communication interface through one or more cellular base stations, and or over another wireless communication interface through a wireless local area network (WLAN) router.

The wireless terminal **10A** may be a mobile radiotelephone forming a part of a radiotelephone communication system 2 as illustrated in **Figure 1****.** The system **2** includes the mobile wireless communication terminal **10A** and a base station transceiver, which is part of a wireless communications network **5.** In some embodiments of the present invention, the network **5** includes a base station transceiver that includes the radio transceiver(s) that define an individual cell in a cellular network and communicates with the mobile terminal **10A** (via an interface **7)** and other mobile terminals in the cell using a radio-link protocol. It will be understood that, in some embodiments of the present invention, many base station transceivers may be connected through, for example, a mobile switching center and other devices to define the wireless communications network **5.**

The mobile terminal **10A** in the illustrated embodiments includes a portable housing assembly **12,** a display **20,** a user interface **22** (*i.e.,* a man machine interface (MMI)), a controller **30,** a communication module **32,** a memory **34,** and a camera device **36.** The foregoing components of the mobile terminal **10A** may be included in many conventional mobile terminals and their functionality is generally known to those skilled in the art. The mobile terminal **10A** further includes an image management module **40,** which may be stored in the memory **34.**

The camera device **36** may be configured to generate a still or picture image and/or a video data stream based on incident light. The image or video stream can be stored in the memory **34,** for example, as a representative digital image file or digital video file.

The display **20** may be any suitable display screen assembly. For example, the display screen **28** may be a liquid crystal display (LCD) with or without auxiliary lighting (*e.g.*, a lighting panel).

The user interface **22** may include any suitable input device(s) including, for example, a touch activated or touch sensitive device (*e.g*., a touch screen), a joystick, a keyboard/keypad, a dial, a directional key or keys, and/or a pointing device (such as a mouse, trackball, touch pad, etc.). The user interface **22** can include a speaker that generates sound responsive to an input audio signal. The user interface **22** can also include a microphone coupled to an audio processor that is configured to generate an audio data stream responsive to sound incident on the microphone.

The controller **30** may support various functions of the mobile terminal 10A. The controller **30** can be any commercially available or custom microprocessor, for example. In use, the controller **30** of the mobile terminal **10A** generates a display image on the display **20.**

The memory **34** is configured to store digital information signals and data such as a digital image signal and/or digital image files.

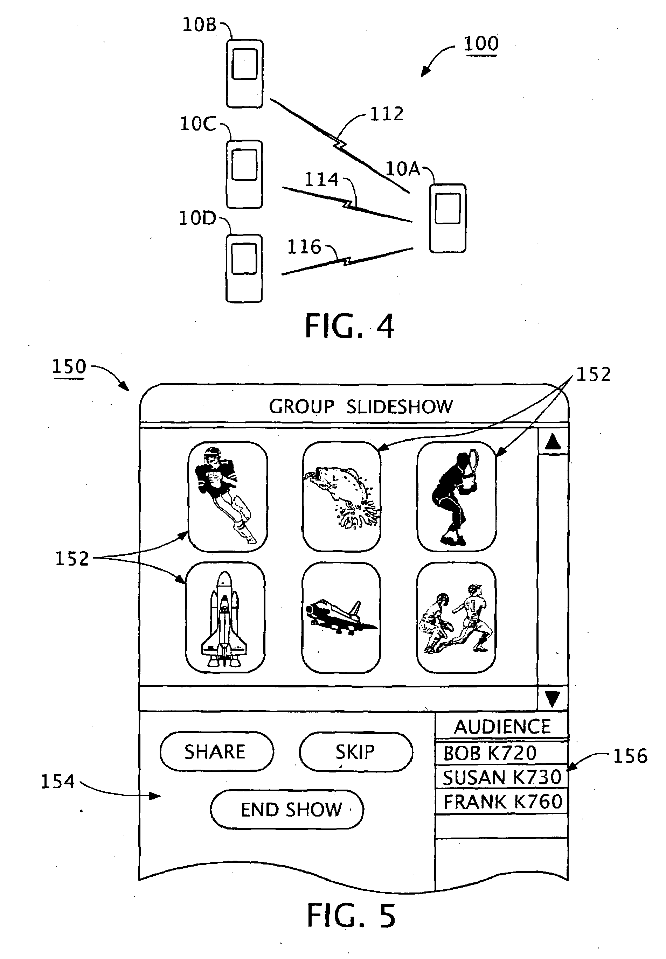

The communication module **32** is configured to communicate data over one or more wireless interfaces (*e.g*., wireless interfaces **112, 114, 116** as discussed herein **(****Figure 4****))** to another remote wireless terminal as discussed herein. The communication module **32** can include a cellular communication module, a direct point-to-point connection module, and/or a WLAN module.

With a cellular communication module, the wireless terminal **10A** can communicate via the base station(s) of the network **5** using one or more cellular communication protocols such as, for example, Advanced Mobile Phone Service (AMPS), ANSI-136, Global Standard for Mobile (GSM) communication, General Packet Radio Service (GPRS), enhanced data rates for GSM evolution (EDGE), code division multiple access (CDMA), wideband-CDMA, CDMA2000, and Universal Mobile Telecommunications System (UMTS). The cellular base stations may be connected to a Mobile Telephone Switching Office (MTSO) wireless network, which, in turn, can be connected to a PSTN and/or another network.

A direct point-to-point connection module may include a direct RF communication module or a direct IR communication module. The direct RF communication module may include a Bluetooth module. With a Bluetooth module, the wireless terminal **10A** can communicate via an ad-hoc network through a direct point-to-point interface. The direct RF communication module may include a WLAN module.

With a WLAN module, the wireless terminal **10A** can communicate through a WLAN router using a communication protocol that may include, but is not limited to, 802.11 a, 802.11b, 802.11 e, 802.11 g, and/or 802.11i.

The communication module **32** can include a transceiver typically having a transmitter circuit and a receiver circuit, which respectively transmit outgoing radio frequency signals (*e.g*., to the network **5,** a router or directly to another terminal) and receive incoming radio frequency signals (*e.g*., from the network **5,** a router or directly to another terminal), such as voice and data signals, via an antenna. The communication module **32** may include a short range transmitter and receiver, such as a Bluetooth transmitter and receiver and/or a WLAN transmitter and receiver. The antenna may be an embedded antenna, a retractable antenna or any antenna known to those having skill in the art without departing from the scope of the present invention. The radio frequency signals transmitted between the mobile terminal **10A** and the network **5,** router or other terminal may include both traffic and control signals (*e.g.*, paging signals/messages for incoming calls), which are used to establish and maintain communication with another party or destination. The radio frequency signals may also include packet data information, such as, for example, cellular digital packet data (CDPD) information. In addition, the transceiver may include an infrared (IR) transceiver configured to transmit/receive infrared signals to/from other electronic devices via an IR port.

The mobile terminal **10A** may also be configured to electrically couple with another terminal via a wireline or cable for the transmission of digital communication signals therebetween.

According to some embodiments, the mobile terminal **10A** is a handheld mobile terminal. By "handheld mobile terminal," it is meant that the outer dimensions of the mobile terminal are adapted and suitable for use by a typical operator using one hand. According to some embodiments, the total volume of the handheld mobile terminal **10A** is less than about 200 cc. According to some embodiments, the total volume of the handheld terminal **10A** is less than about 100 cc. According to some embodiments, the total volume of the handheld mobile terminal **10A** is between about 50 and 100 cc. According to some embodiments, no dimension of the handheld mobile terminal **10A** exceeds about 200 mm.

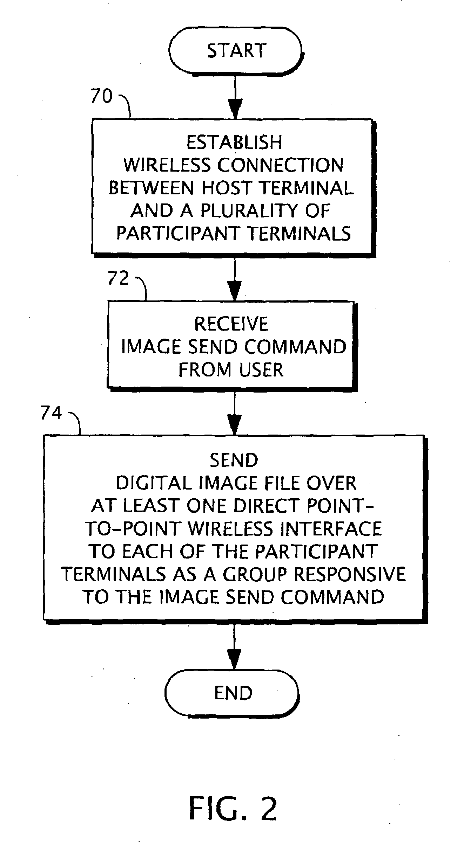

A method for providing a slideshow using a wireless communication terminal (*e.g*., the mobile terminal **10A**) will now be described with reference to the flowchart of **Figure 2****.** Referring to **Figure 2****,** the method includes establishing a wireless connection between a host wireless communication terminal and a plurality of participant wireless communication terminals **(Block 70).** An image send command is received from a user **(Block 72).** A digital image file is sent over at least one direct point-to-point wireless interface to each of the plurality of participant wireless communication terminals as a group responsive to the image send command **(Block 74).** According to some embodiments, the direct point-to-point interface is a Bluetooth wireless RF connection.

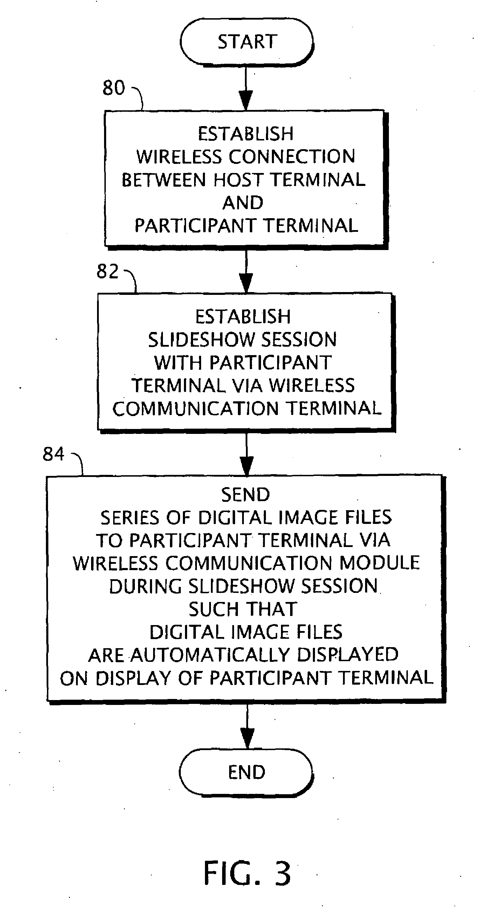

Another method for providing a slideshow using a wireless communication terminal (*e.g*., the mobile terminal **10A**) will now be described with reference to the flowchart of **Figure 3****.** Referring to **Figure 3****,** the method includes establishing a wireless connection between the host wireless communication terminal and at least one participant wireless communication terminal **(Block 80).** A slideshow session is established with at least one participant wireless communication terminal via the wireless communication module **(Block 82).** A series of digital image files are sent to the at least one participant wireless communication terminal via the wireless communication module during the slideshow session such that the digital image files are automatically displayed on a display of the at least one participant wireless communication terminal **(Block 84).** According to some embodiments, the wireless communication module is configured to communicate with other communication terminals over a direct point-to-point wireless interface and the controller is configured to establish the slideshow session with the at least one participant wireless communication terminal and to send the series of digital image files to the at least one participant wireless communication terminal during the slideshow session via the direct point-to-point wireless interface. According to some embodiments, the direct point-to-point interface is a Bluetooth wireless RF connection.

Methods for providing a slide show may include a combination of the methods of described with reference to **Figures 2** and **3**. Further methods including that of the invention will be apparent from the following description.

With reference to **Figure 4****,** a slideshow display system **100** according to embodiments of the present invention is shown therein. The system **100** includes the mobile wireless communication terminal **10A** (also referred to herein as the "host wireless communication terminal" or "host terminal") and a plurality of additional participant wireless communication terminals **10B, 10C,** and **10D** (also referred to herein as the "participant wireless communication terminals" or "participant terminals").

The terminals **10B-D** may be configured as described above with regard to the terminal **10A.** The terminals **10B-D** each include a wireless communication module **32** and an image management module **40.** However, the respective image management modules may be differently configured for each terminal **10A-D** depending on the intended functionality of the device. According to some embodiments, all or some of the terminals **10B-D** are mobile wireless communication terminals. According to some embodiments, all or some of the terminals **10A-D** are handheld mobile wireless communication terminals.

The system **100** will now be described using an illustrative example of use. A group of users at a gathering each have a respective one of the terminals **10A-D.** Various image files are stored on the host terminal **10A.** The host may wish to share some or all of the image files stored on his mobile terminal **10A** with the other users at the gathering. Displaying the images on the host's own mobile terminal **10A** for viewing by the other users may be cumbersome or infeasible. A properly equipped media center may be unavailable, unsuitable and/or undesirable for use. With known and available technology, the image files can be sent file-by-file and participant-by-participant to the participants' own terminals **108-D** using a wireless interface (*e.g.,* via MMS, Bluetooth, etc.). Each participant can then view the image files on his or her own display. While this approach may be preferable to the other conventionally available options, it may require a substantial amount of work by the host and may be time-consuming and inconvenient. This approach may also be inconvenient for the participants, who typically must actively interact with their mobile terminal (*e.g.,* toggle through the images files) to accept, access and view the image files.

In accordance with embodiments of the present invention, the foregoing shortcomings can be overcome by establishing a slideshow session and executing a slideshow using the host terminal **10A.** Typically, each terminal **10A-D** will have the appropriate image management module **40** (*e.g*., software or firmware application) installed thereon. The respective image management modules **40** and controllers **30** of the host and participant terminals may cooperate to provide the communication, display, connection and other functionality and operations described herein.

To initiate the slideshow procedure, the host instructs the controller **30** of the host terminal **10A** to invoke the slideshow function. For example, the slideshow procedure may be initiated by selecting a "GROUP SLIDESHOW" function or the like from a menu of the host terminal **10A.** The function may be provided as an option in a menu in a picture view mode of the host terminal **10A.**

The controller **30** of the host terminal **10A** establishes a wireless connection (*i.e.,* communicatively couples) with each of the participant terminals **10B-D.** According to some embodiments, the wireless connection is a direct point-to-point wireless communication interface connection, according to some embodiments, a direct point-to-point RF connection and, according to some embodiments, a Bluetooth connection. The connections may be established in a known manner. For example, in the case of Bluetooth connections, the participant (slave) terminals **10B-D** may be set to a searchable/discoverable state and the host (master) terminal **10A** emits an inquiry to identify the available participant (slave) terminals **10B-D** to form a piconet or personal area network.

As illustrated, the host terminal **10A** communicates with the participant terminals **10B, 10C** and **10D** via direct point-to-point wireless interfaces or links **112, 114** and **116,** respectively. According to some embodiments, the host terminal **10A** may communicate with a further participant terminal via wireless interfaces or links through a WLAN router. According to some contemplated embodiments, all of the signals provided between the host terminal **10A** and the participant terminals **10B-D** to execute the slideshow procedure are provided via direct point-to-point wireless interfaces. According to some contemplated embodiments, all of the signals provided between the host terminal **10A** and the participant terminals to execute the slideshow procedure are provided via direct wireless radio frequency (RF) interfaces such as Bluetooth interfaces.

Before or after establishing the connections, the host terminal **10A** may allow the host to identify and designate valid participant terminals by any suitable method. The host terminal **10A** may be used to define specific, predefined groups such as a group of the potential participant terminals that will be permitted to participate and/or a group of the potential participant terminals that may be invited to join the participant group. One or more predefined groups may be stored on the host terminal 10A in the memory **34** for subsequent retrieval and use.

The host terminal **10A** then sends an invitation signal to each of the participant terminals **10B-D.** For example, the invitation signal may cause the receiving participant terminals **10B-D** to display to the respective end users an inquiry such as "TOMAS K750 WOULD LIKE TO RUN A SLIDESHOW ON YOUR PHONE. DO YOU ACCEPT?" Each potential participant may then operate his or her participant terminal **10B-D** to reply to the host terminal **10A** with an acceptance signal. For example, the participant terminals **10B-D** may provide "YES" and "NO" soft keys for responding. The controller **30** of the host terminal **10A** then adds the accepting participant terminals to a slideshow distribution group list.

The host may selectively control which of the available participant terminals receive the aforementioned invitation signals. The host terminal **10A** may provide suitable menu options (*e.g.,* in the form of soft keys) such as "CHOOSE GROUP" and "SEARCH FOR PHONES".

If the "CHOOSE GROUP" option is selected, the host terminal **10A** allows the host to select from one or more predefined groups of participant terminals, the members of which will thereafter receive an invitation signal and may join the slideshow distribution group by replying as discussed above.

If the "SEARCH FOR PHONES" option is selected, the host terminal **10A** will scan the area to identify the available potential participant terminals (*e.g.,* those within operational range of the host terminal's Bluetooth signal). The controller **30** will generate a list of the available potential participants. The host may select (*e.g.,* using check boxes) the potential participant terminals to which an invitation signal will be sent. The potential participant terminals may then opt in by replying with an acceptance signal to accept the invitation and join the slideshow distribution group.

In the foregoing manner, the participant slideshow distribution group is set and connections are established between the host terminal **10A** and each of the participant terminals in the participant slideshow distribution group (as illustrated, the participant terminals **10B-D).** Once the connections are established between the host terminal **10A** and the participant terminals **10B-D,** the host can establish and execute a slideshow session. During the slideshow session, the host terminal **10A** sends image files to the participant terminals **10B-D** of the slideshow distribution group, and the receiving participant terminals **10B-D** display these image files on their respective display screens.

The host terminal **10A** may provide the host with an interface that allows the host to preview images before sending them and to selectively withhold image files from the slideshow as desired. By way of illustration, the image management module **40** provides a user interface display on the host terminal **10A** such as a display **150** as shown in **Figure 5****,** which is merely exemplary. In the illustrated embodiment, the display **150** includes image thumbnails **152,** control buttons **154,** and a participant listing **156** (under the heading "AUDIENCE"). The host can then select the thumbnail **152** corresponding to each image the host wishes to include in the slideshow. After a thumbnail is selected, the host hits the "SHARE" button to send the image to the participant terminals **10B-D.** Alternatively, the image management module **40** may enable the host to select multiple thumbnails for the slideshow before sending the corresponding image files to the participants. The host may be enabled to send a pre-existing group or set of image files. The image management module **40** may allow the host to edit or modify the group of images (*e.g.,* delete selected images) before distributing.

Other techniques may be employed to enable selection of the slideshow images. For example, the image management module **40** may list available image files by name and allow the host to select (*e.g.,* using check boxes) the image files for the slideshow. The image management module **40** may display each image file in turn and allow the host to either skip the image file or send it as part of the slideshow.

Various other ways of structuring the slideshow will be apparent to those of skill in the art upon reading the description herein. In addition to determining the image files to be included in the slideshow, the image management module **40** may enable the user to select other parameters such as image resolution, image display time, transition time between display of images, transition type (*e.g*., immediate replacement, fade in, fade out, intervening blackout, etc.), image background, etc. It will be appreciated that more, less and/or different information may be provided in the display **150** as well.

The slideshow may be automated such that image after image is distributed without requiring the host to individually command the controller **30** to send each image file. Alternatively, the image files may be distributed one at a time responsive to respective send commands from the host to the host terminal **10A.** In either case, the host actuates a send or share command to the controller **30** of the host terminal **10A,** responsive to which the controller **30** of the host terminal **10A** then sends a digital image file to each of the participant terminals **10B-D** as a group. That is, the controller **30** executes the send command by sending the image file to each member of the slideshow distribution group so that the host is not required to send the image file to each participant terminal individually (*i.e*., by separately activating a send command for each participant terminal). Responsive to the send command or commands, the image files may be sent to the distribution group in series or succession for serial display as a slideshow.

Distributed image files may be stored on the participant terminal for display. Alternatively, the image file may be streamed to the participant terminal. The image file, whether streamed or stored in whole, may be automatically erased (*i.e*., without user intervention) from the host terminal **10A** after display during the slideshow. According to some embodiments, the digital image files are sent from the host terminal **10A** to the participant terminals **10B-D** serially and in temporally spaced apart sequence so that the number of such image files stored on each participant terminal can be limited. Each such image file may be automatically erased during and/or before receipt of the next image file.

The host terminal **10A** may pre-selects or identify a specified set of image files to be included in the slideshow. For example, the set may be comprised of "pictures taken in May 2004", from a specified "share folder", or the like. When the slideshow session is initiated, the first image file is sent to the participant terminals **10B-D** as described herein and the other image files of the specified set are also sent wirelessly to the participant terminals **10B-D** "in the background". These other image files are stored locally on the participant terminals **10B-D** to await subsequent display thereon. According to some embodiments, the host terminal **10A** sends the subsequent image files while the first image file is being displayed. For example, the latter nine of a set of ten image files may be wirelessly sent to and stored on the participant terminals **10B-D** while the first image of the set is being displayed. According to the present invention, when it is time to view a stored image file, the controller **30** of the host terminal **10A** sends a signal to each participant terminal **10B-D** to display the stored image file. The host terminal **10A** sends a short command or pointer to the participant terminals **10B-D** instructing or causing the participant terminals **10B-D** to display the chosen image file (e.g., "show pic DSC0232") instead of sending the image file itself. This has the advantage that it is not necessary to wait for each image file (which may be relatively large) to be sent to and loaded onto the participant terminals **10B-D** after display of the previous image file. This may serve to speed up the slideshow and minimize delay or the impression of delay. The stored files may be temporarily stored on the participant terminals **10B-D** and may be automatically erased after display.

The controller **30** of the host terminal **10A** may execute the foregoing steps for each image file in turn and automatically (i.e., without user intervention).

Responsive to the image send command from the host, each image file may be sent to the participant terminals **10B-D** such that it is displayed simultaneously on the displays of each of the plurality of participant terminals **10B-D.** In this way, the images can be simultaneously viewed by the participants as if they were viewing the same display. Each image file may be sent to the participant terminals **10B-D** such that it is first displayed on each participant terminal substantially simultaneously (*i.e*., such that any delay in initiation of display of the image file as between participant terminals is not readily perceptible to the end users). Responsive to the send command, the data signal(s) or packet(s) embodying the image file may be sent by the host terminal to the participant terminals substantially simultaneously. In this case, a shared signal may be issued by the host terminal and received by multiple participant terminals. Alternatively, separate signals may be issued to respective ones of the participant terminals simultaneously or without deliberate delays between issuance of the separate signals. According to some embodiments, the time period between issuance of each such separate signal and the next does not exceed one second.

During the slideshow session, the image files may be "pushed" by the host terminal **10A** onto the participant terminals **10B-D.** Once the slideshow session has been established, the image files received by the participant terminals from the host terminal **10A** are automatically displayed by the participant terminals without requiring further action by the participant. That is, once a participant terminal **10B-D** has accepted the invitation to join the slideshow, the images are displayed in series without requiring the participant to accept each image file from the host terminal **10A.** Each image file may be sent to the participant terminals such that the image file is automatically simultaneously displayed on each participant terminal. Each image file may be sent to the participant terminals such that the image file is automatically first displayed (*i.e*., the display is automatically initiated) on each participant terminal substantially simultaneously.

As the host terminal **10A** runs through the image files in this fashion, the host may modify the not yet shown portion of the slideshow as desired. According to some embodiments, new participant terminals can join the group and receive the slideshow as the host terminal **10A** runs through the slideshow.

The digital image files sent by the host terminal **10A** to the participant terminals **10B-D** may be any suitable image files. According to some embodiments, the distributed image files are copies of image files stored in the memory (*e.g*., the memory **34)** of the host terminal **10A.** The image files may be digital picture files. The image files may be copies of picture files acquired using the camera **device 36.**

The system **100** can provide a convenient and enjoyable system for displaying image files to others, particularly in a slideshow format. The system **100** can also allow the host terminal to create, coordinate, control and/or manage the slideshow.

While slideshows including a series of image files are discussed above, a slideshow may include only a single image file.

While the system **100** as described includes a plurality of participant terminals, according to other embodiments only a single participant terminal is included in the slideshow distribution group. In particular, according to some embodiments, a slideshow session is established between the host terminal **10A** and the participant terminal, a series of digital image files are sent from the host terminal **10A** to the participant terminal during the slideshow session, and the image files are pushed onto and automatically displayed on the participant terminal during the slideshow session without requiring further input such as image-by-image acceptance from the participant terminal. For example, the acceptance of an invitation to join a slideshow may be the only response required of the participant terminal in order to view a multi-image, serial slide show.

As will be appreciated from the foregoing description, all or some of the direct point-to-point wireless interface connections between the host terminal **10A** and the participant terminals **10B-D** may be direct point-to-multiple point wireless interface connections. The signals sent by the host terminal **10A** to the participant terminals **10B-D** may be sent via direct point-to-multiple point wireless interface connections.

The signals may be broadcast by the host terminal **10A** to the participant terminals **10B-D.** For example, the image files may be broadcast by the host terminal **10A** to the participant terminals **10B-D** to effect a slideshow as described herein.

The application programs described herein, including the image management module **40,** are illustrative of programs that implement various features according to embodiments of the present invention. It will be appreciated that other and/or additional application programs may be employed in accordance with embodiments of the present invention.

Although **Figure 1** illustrates an exemplary hardware/software architecture that may be used in mobile terminals and/or other electronic devices for providing a slideshow, it will be understood that the present invention is not limited to such a configuration but is intended to encompass any configuration capable of carrying out operations described herein. For example, although the memory **34** is illustrated as separate from the controller **30,** the memory **34** or portions thereof may be considered as a part of the controller **30**. Moreover, the functionality of the hardware/software architecture of **Figure 1** may be implemented as a single processor system or a multi-processor system in accordance with various embodiments of the present invention.

## Claims

1. A mobile wireless communication tenninal comprising:
a wireless communication module that is configured to communicate with other communication terminals over a wireless interface; and
a controller that is configured to establish a slideshow session with at least one participant wireless communication terminal via the wireless communication module, **characterized in that** the controller is configured to send a series of digital image files to the at least one participant wireless communication terminal via the wireless communication module during the slideshow session including a first digital image file to be automatically displayed on a display of the at least one participant wireless communication terminal and other digital image files to be stored in each of the plurality of wireless communication terminals, and also to send a pointer identifying one of said stored other digital image files to each of the plurality of participant wireless communication terminals, when it is time to view said one of said stored other digital image files.

2. The wireless communication terminal of Claim 1 wherein the controller is configured to send the series of digital image files to the at least one participant wireless communication terminal in a temporally spaced apart sequence.

3. The wireless communication terminal of Claim 1 or 2, wherein the controller is configured to send an invitation signal to the at least one participant wireless communication terminal to participate in the slideshow session, and to receive an acceptance signal from the at least one participant wireless communication terminal to participate in the slideshow session.

4. The wireless communication terminal of Claim 1-3, wherein:
the wireless communication module is configured to communicate with the other communication terminals over a direct point-to-point wireless interface; and
the controller is configured to establish the slideshow session with the at least one participant wireless communication terminal and to send the series of digital image files to the at least one participant wireless communication terminal during the slideshow session via the direct point-to-point wireless interface.

5. The wireless communication terminal of Claim 1-4 wherein the wireless communication module comprises a short range transmitter and the controller is configured to send the digital image file to the at least one participant wireless communication terminal via the short range transmitter.

6. The wireless communication terminal of Claim 5 wherein the short range transmitter is a Bluetooth transmitter.

7. The wireless communication terminal of Claim 5 wherein the short range transmitter is a WLAN transmitter.

8. The wireless communication terminal of Claim 1-7 wherein the wireless communication terminal includes a cellular telephone.

9. A method for providing a slideshow using a host mobile wireless communication terminal, the method comprising:
establishing a wireless connection between the host wireless communication terminal and at least one participant wireless communication terminal;
establishing a slideshow session with the at least one participant wireless communication terminal via the wireless communication module;
**characterized by**:
sending a series of digital image files to the at least one participant wireless communication terminal via the wireless communication module during the slideshow session including a first digital image file to be automatically displayed on a display of the at least one participant wireless communication terminal and other digital image files to be stored in each of the plurality of wireless communication terminals, and
sending a pointer identifying one of said stored other digital image files to each of the plurality of participant wireless communication terminals, when it is time to view said one of said stored other digital image files.

10. The method of Claim 9, wherein the series of digital image files includes a first image file and at least one subsequent image file and the method includes:
sending the first image file to the at least one participant terminal;
displaying the first image file on the at least one participant terminal;
sending the at least one subsequent image file to the at least one participant terminal while displaying the first image file on the at least one participant terminal;
storing the at least one subsequent image file on the at least one participant terminal; and thereafter
displaying the at least one subsequent image file on the at least one participant terminal.

## Patentansprüche

1. Mobil-Drahtlos-Kommunikationsendgerät, umfassend:
ein Drahtlos-Kommunikationsmodul, das konfiguriert ist, um mit anderen Kommunikationsendgeräten über eine Drahtlos-Schnittstelle zu kommunizieren, und
einen Controller, der konfiguriert ist, um eine Slideshow-Sitzung mit mindestens einem Teilnehmer-Drahtlos-Kommunikationsendgerät über das Drahtlos-Kommunikationsmodul herzustellen, **dadurch gekennzeichnet, dass** der Controller konfiguriert ist, um eine Serie von digitalen Bilddaten zu dem mindestens einem Teilnehmer-Drahtlos-Kommunikationsendgerät über das Drahtlos-Kommunikationsmodul während der Slideshow-Sitzung zu senden, beinhaltend eine erste Digitalbilddatei, um automatisch auf einer Anzeige des mindestens einem Teilnehmer-Drahtlos-Kommunikationsendgeräts dargestellt zu werden und andere Digitalbilddateien, um in jeder der Vielzahl von Drahtlos-Kommunikationsendgeräten gespeichert zu werden, und, um ebenfalls einen Zeiger, der eine der gespeicherten Digitalbilddateien identifiziert, zu jedem der Vielzahl von Teilnehmer-Drahtlos-Kommunikationsendgeräten zu senden, wenn es Zeit ist die eine der anderen gespeicherten Digitalbilddateien zu betrachten.

2. Drahtlos-Kommunikationsendgerät nach Anspruch 1, wobei der Controller konfiguriert ist, um die Serie von Digitalbilddateien zu dem mindestens einen Teilnehmer-Drahtlos-Kommunikationsendgerät in einer zeitlich beabstandeten Sequenz zu senden.

3. Drahtlos-Kommunikationsendgerät nach Anspruch 1 oder 2, wobei der Controller konfiguriert ist, um ein Einladungssignal zu dem mindestens einen Teilnehmer-Drahtlos-Kommunikationsendgerät zu senden, um in der Slideshow-Sitzung teilzunehmen, und, um ein Annahmesignal von dem mindestens einen Teilnehmer-Drahtlos-Kommunikationsendgerät zu empfangen, um in der Slideshow-Sitzung teilzunehmen.

4. Drahtlos-Kommunikationsendgerät nach Anspruch 1 bis 3, wobei:
das Drahtlos-Kommunikationsmodul konfiguriert ist, um mit den anderen Kommunikationsendgeräten über eine direkte Punkt-zu-Punkt-Drahtlosschnittstelle zu kommunizieren; und
der Controller konfiguriert ist, um die Slideshow-Sitzung mit dem mindestens einen Teilnehmer-Drahtlos-Kommunikationsendgerät herzustellen und, um die Serie von Digitalbilddaten zu dem mindestens einen Teilnehmer-Drahtlos-Kommunikationsendgerät während der Slideshow-Sitzung über die Direkt-Punkt-zu-Punkt-Drahtlosschnittstelle zu senden.

5. Drahtlos-Kommunikationsendgerät nach Anspruch 1 bis 4, wobei das Drahtlos-Kommunikationsmodul einen Kurzstreckenübertrager umfasst und der Controller konfiguriert ist, um die Digitalbilddaten zu dem mindestens einen Teilnehmer-Drahtlos-Kommunikationsendgerät über den Kurzstreckenübertrager zu senden.

6. Drahtlos-Kommunikationsendgerät nach Anspruch 5, wobei der Kurzstreckenübertrager ein Bluetooth-Übertrager ist.

7. Drahtlos-Kommunikationsendgerät nach Anspruch 5, wobei der Kurzstreckenübertrager ein WLAN-Übertrager ist.

8. Drahtlos-Kommunikationsendgerät nach Anspruch 1 bis 7, wobei das Drahtlos-Kommunikationsendgerät ein Mobiltelefon beinhaltet.

9. Verfahren zum Bereitstellen einer Slideshow unter Verwendung eines Host-Mobil-Drahtlos-Kommunikationsendgeräts, umfassend:
Herstellen einer Drahtlosverbindung zwischen dem Host-Drahtlos-Kommunikationsendgerät und mindestens einem Teilnehmer-Drahtlos-Kommunikationsendgerät;
Herstellen einer Slideshow-Sitzung mit dem mindestens einen Teilnehmer-Drahtlos-Kommunikationsendgerät über das Drahtlos-Kommunikationsmodul;
**gekennzeichnet durch**
Senden einer Serie von Digitalbilddaten zu dem mindestens einen Teilnehmer-Drahtlos-Kommunikationsendgerät über das Drahtlos-Kommunikationsmodul während der Slideshow-Sitzung, beinhaltend eine erste Digitalbilddatei, um automatisch auf einer Anzeige des mindestens einen Teilnehmer-Drahtlos-Kommunikationsendgeräts dargestellt zu werden, und andere Digitalbilddateien, um in jedem der Vielzahl von Drahtlos-Kommunikationsendgeräten gespeichert zu werden, und
Senden eines Zeigers, der eine der gespeicherten anderen Digitalbilddateien identifiziert, zu jeder der Vielzahl von Teilnehmer-Drahtlos-Kommunikationsendgeräten, wenn es Zeit ist die eine der anderen gespeicherten Digitalbilddateien zu betrachten.

10. Verfahren nach Anspruch 9, wobei die Serie von Digitalbilddateien eine erste Bilddatei und mindestens eine folgende Bilddatei beinhaltet und das Verfahren beinhaltet:
Senden der ersten Bilddatei zu mindestens einem Teilnehmer-Endgerät;
Anzeigen der ersten Bilddatei auf dem mindestens einen Teilnehmer-Endgerät;
Senden der mindestens einer folgenden Bilddatei zu dem mindestens einen Teilnehmer-Endgerät, während des Anzeigens der ersten Bilddatei auf dem mindestens einen Teilnehmer-Endgerät;
Speichern der mindestens einen folgenden Bilddatei auf dem mindestens einen Teilnehmer-Endgerät; und danach
Anzeigen der mindestens einen folgenden Bilddatei auf dem mindestens einen Teilnehmer-Endgerät.

## Revendications

1. Terminal de communication sans fil mobile comprenant :
un module de communication sans fil qui est configuré de manière à communiquer avec d'autres terminaux de communication sur une interface sans fil ; et
un contrôleur qui est configuré de manière à établir une session de diaporama avec au moins un terminal de communication sans fil participant par l'intermédiaire du module de communication sans fil, **caractérisé en ce que** le contrôleur est configuré de manière à envoyer une série de fichiers d'images numériques au ou aux terminaux de communication sans fil participants par l'intermédiaire du module de communication sans fil au cours de la session de diaporama, comprenant un premier fichier d'images numériques à afficher d automatiquement sur un affichage du ou des terminaux de communication sans fil participants et d'autres fichiers d'images numériques à stocker dans chacun de la pluralité de terminaux de communication sans fil, et à envoyer également un pointeur qui identifie l'un desdits autres fichiers d'images numériques stockés à chacun de la pluralité de terminaux de communication sans fil participants, quand il est le moment de visualiser celui desdits autres fichiers d'images numériques stockés.

2. Terminal de communication sans fil selon la revendication 1, dans lequel le contrôleur est configuré de manière à envoyer la série de fichiers d'images numériques au ou aux terminaux de communication sans fil participants en une séquence espacée dans le temps.

3. Terminal de communication sans fil selon les revendications 1 ou 2, dans lequel le contrôleur est configuré de manière à envoyer un signal d'invitation au ou aux terminaux de communication sans fil participants à participer à la session de diaporama, et à recevoir du ou des terminaux de communication sans fil participants un signal d'acceptation de participation à la session de diaporama.

4. Terminal de communication sans fil selon l'une quelconque des revendications 1 à 3, dans lequel :
le module de communication sans fil est configuré de manière à communiquer avec les autres terminaux de communication sur une interface sans fil point à point directe ; et
le contrôleur est configuré de manière à établir la session de diaporama avec le ou les terminaux de communication sans fil participants et à envoyer la série de fichiers d'images numériques au ou aux terminaux de communication sans fil participants au cours de la session de diaporama par l'intermédiaire de l'interface sans fil point à point directe.

5. Terminal de communication sans fil selon l'une quelconque des revendications 1 à 4, dans lequel le module de communication sans fil comprend un émetteur de courte portée et le contrôleur est configuré de manière à envoyer le fichier d'images numériques au ou aux terminaux de communication sans fil participants par l'intermédiaire de l'émetteur de courte portée.

6. Terminal de communication sans fil selon la revendication 5, dans lequel l'émetteur de courte portée est un émetteur Bluetooth.

7. Terminal de communication sans fil selon la revendication 5, dans lequel l'émetteur de courte portée est un émetteur WLAN.

8. Terminal de communication sans fil selon l'une quelconque des revendications 1 à 7, dans lequel le terminal de communication sans fil comprend un téléphone cellulaire.

9. Procédé destiné à fournir un diaporama à l'aide d'un terminal de communication sans fil mobile hôte, le procédé comprenant :
l'établissement d'une connexion sans fil entre le terminal de communication sans fil hôte et le ou les terminaux de communication sans fil participants ;
l'établissement d'une session de diaporama avec le ou les terminaux de communication sans fil participants par l'intermédiaire du module de communication sans fil ;
**caractérisé par** :
l'envoi d'une série de fichiers d'images numériques au ou aux terminaux de communication sans fil participants par l'intermédiaire du module de communication sans fil au cours de la session de diaporama, comprenant un premier fichier d'images numériques à afficher automatiquement sur un affichage du ou des terminaux de communication sans fil participants et d'autres fichiers d'images numériques à stocker dans chacun de la pluralité de terminaux de communication sans fil ; et
l'envoi d'un pointeur qui identifie l'un desdits autres fichiers d'images numériques stockés à chacun de la pluralité de terminaux de communication sans fil participants, lorsque c'est le moment de visualiser chacun desdits autres fichiers d'images numériques stockés.

10. Procédé selon la revendication 9, dans lequel la série de fichiers d'images numériques comprend un premier fichier d'image et au moins un fichier d'image subséquent et le procédé comprend :
l'envoi du premier fichier d'images au ou aux terminaux participants ;
l'affichage du premier fichier d'images sur le ou les terminaux participants ;
l'envoi du ou des fichiers d'images subséquents au ou aux terminaux participants tout en affichant le premier fichier d'images sur le ou les terminaux participants ;
le stockage du ou des fichiers d'images subséquents sur le ou les terminaux participants ; et ensuite
l'affichage du ou des fichiers d'images subséquents sur le ou les terminaux participants.
